Europäisches Patentamt

European Patent Office

Office européen des brevets

(11) Veröffentlichungsnummer: **0 303 966**
**A2**

## (12) EUROPÄISCHE PATENTANMELDUNG

(21) Anmeldenummer: 88113040.5

(22) Anmeldetag: **11.08.88**

(51) Int. Cl.⁴: **B26D 1/02 , A22C 11/00**

(30) Priorität: 20.08.87 DE 3727795

(43) Veröffentlichungstag der Anmeldung:
**22.02.89 Patentblatt 89/08**

(84) Benannte Vertragsstaaten:
**AT BE CH DE FR GB IT LI NL SE**

(71) Anmelder: **HOECHST AKTIENGESELLSCHAFT**
**Postfach 80 03 20**
**D-6230 Frankfurt am Main 80(DE)**

(72) Erfinder: **Warzecha, Klaus, Dr.**
**Himbeerweg 29**
**D-6200 Wiesbaden(DE)**
Erfinder: **Weinheimer, Alois**
**Weinheimer Landstrasse 109**
**D-6508 Alzey 1(DE)**

(54) **Vorrichtung zum Schälen von Würsten.**

(57) Die Vorrichtung zum Schälen von hintereinander in einem Wurststrang angeordneten Würsten umfasst eine Einheit zum längsaxialen Transport des Wurststrangs und eine Schneideinrichtung, insbesondere ein Messer, zum längsaxialen Aufschlitzen der Wursthülle. Die Wursthülle, deren Hüllenmaterial insbesondere aus verstärkungsfreier regenerierter Cellulose besteht, wird dabei von der Wurstmasse entfernt. Zur Verarbeitung von Brühwurst in Cellulosekranzdarm umfaßt die Einheit zum Transport des Wurststrangs eine oder mehrere rotierbare, achsparallel zueinander angeordnete, vorzugsweise antreibbare Rollen, welche den Wurststrang auf einer gebogenen Bahn zunächst nach oben und dann nach unten zur Schneideinrichtung transportieren.

EP 0 303 966 A2

## Vorrichtung zum Schälen von Würsten

Die Erfindung bezieht sich auf eine Vorrichtung zum Schälen von Würsten, die hintereinander in einem Wurststrang angeordnet sind, wobei die Wursthülle, deren Hüllenmaterial insbesondere aus verstärkungsfreier regenerierter Cellulose besteht, von der Wurstmasse entfernt wird. Solche Vorrichtungen umfassen eine Einheit zum längsaxialen Transport des Wurststrangs und eine Schneidevorrichtung, insbesondere ein Messer, zum längsaxialen Aufschlitzen der Wursthülle.

Vorrichtungen dieser Art werden bisher bei der Herstellung von Wiener Würstchen eingesetzt, welche bekanntlich ein relativ kleines Kaliber aufweisen und nicht gebogen sind. Der Wurststrang wird geradlinig in Richtung seiner Längsachse zu einem Messer geführt, welches die Wursthülle längsaxial aufschlitzt. Unter einem Wurststrang ist eine Vielzahl von hintereinander angeordneten Würsten zu verstehen, die eine gemeinsame Schlauchhülle besitzen, welche zur Portionierung jeweils zwischen zwei benachbarten Würsten verdrillt ist. Diese Vorrichtungen sind für gebogene Würste vom Brühwursttyp, welche im sogenannten Kranzdarm hergestellt werden, nicht geeignet. Ausgehend von diesem Stand der Technik ist es deshalb Aufgabe der Erfindung, eine Vorrichtung anzugeben, die zur Verarbeitung von Brühwurst im Cellulosekranzdarm geeignet ist. Unter Kranzdarm sollen gebogene Wursthüllen verstanden werden, die über ihre Gesamtlänge maximal einen halben Kreis beschreiben und ein Kaliber von größer als 30mm aufweisen.

Diese Aufgabe wird gelöst durch die Vorrichtung mit den im Anspruch 1 genannten Merkmalen. Die abhängigen Ansprüche geben zweckmäßige Weiterbildungen der Vorrichtung an.

Die Einheit zum Transport des Wurststranges besteht aus mehreren in einer gemeinsamen Ebene angeordneten Rollen, deren Drehachsen zueinander parallel sind. Ihre Anordnung ist so gewählt, daß ein über ihre Umfangsflächen geführter Wurststrang eine gebogene Bahn, vorzugsweise einen Halbkreis, durchläuft. Zumindest die am Ende der Bahn vorhandenen Rollen sind angetrieben, um den Wurststrang transportieren zu können. In bevorzugter Ausführungsform wird zum Transport des Wurststranges eine einzige Rolle vorgesehen, die dann allerdings einen wesentlich größeren Durchmesser aufweist. Der Radius der vom Wurststrang durchlaufenen gebogenen Strecke ist größer oder gleich der Biegung der einzelnen Würste. Bei gebogenen Wursthüllen mit einem Innenradius von 7 bis 10cm kann in entsprechender Weise der Bahnradius bis zu 20 cm, vorzugsweise bis zu 15cm, betragen.

Der Wurststrang durchläuft die Rollenbahn bzw. die große Einzelrolle zunächst nach oben und dann nach unten, so daß er auf der Umfangsfläche der Rolle(n) aufliegt und keine weiteren Halteeinrichtungen erforderlich sind.

Die große Einzelrolle oder die kleineren Rollen sind zweckmäßigerweise zylinderförmig und besitzen vorteilhafterweise seitliche Führungselemente, welche den Wurststrang auf der gebogenen Bahn in einer annähernd senkrechten Ebene führen. Hierzu besitzen die Rollen beispielsweise eine umlaufende Vertiefung, die im Quer schnitt V-förmig, U-förmig oder halbkreisförmig gebogen sein kann. Bei einer anderen Ausführungsform ist an jeder Rollenseitenfläche eine kreisförmige Scheibe angebracht, deren Durchmesser größer ist als der Rollendurchmesser, so daß ihr über den Rollenumfang überstehender Umfangsrand eine seitliche Führung für den Wurststrang ergibt. Eine weitere Variante sieht vor, daß auf der Umfangsfläche der kreiszylinderförmigen Rolle(n) zwei umlaufende Erhebungen vorhanden sind, welche die Form von kreisförmigen Ringen oder Wulsten aufweisen.

Die Führungselemente zur seitlichen Abstützung des Wurststranges, wie sie in den vorgenannten Ausführungsformen beispielhaft aufgezeigt wurden, werden zweckmäßigerweise parallel zur Drehachse der Rolle(n) verstellbar angeordnet, so daß die Vorrichtung für verschiedene Hüllenkaliber eingesetzt werden kann.

Die Umfangsfläche der Rolle(n) sollte als Auflagefläche für den Wurststrang nicht zu glatt sein, um eine ausreichende Haftung des Wurststranges beim Transport über die Rolle(n) zu gewährleisten. Vorteilhafterweise sind diese Oberflächen mit Rillen, Noppen oder einem Rastermuster versehen. Als Oberflächenmaterial sind elastische, weiche Kunststoffe oder Gummi besonders geeignet.

Die Vorrichtung umfaßt ferner die Schneideinrichtung zum längsaxialen Anritzen und Aufschlitzen der Wursthülle, welche sich gewöhnlich im abwärts gebogenen Teil der vom Wurststrang zurückgelegten Strecke befindet. Die Schneid einrichtung besteht aus einem spitz zulaufenden Messer, dessen Schneidefläche vorzugsweise in einem Winkel von 50 bis 90° zur Wursthüllenoberfläche steht. Die für das Messer erforderliche Halterung wird an einem Hebelarm befestigt, welcher mit einem entsprechenden Gewicht oder einer Feder versehen ist, damit die Halterung mit optimalem Druck auf der Wursthüllenoberfläche aufliegt.

Es ist zur Entfernung der Cellulosehülle von der Wurstmasse besonders von Vorteil, wenn die aufgeschlitzte Hülle mit Wasserdampf oder Luft oder einem Wasserdampf-Luft-Gemisch angeblasen wird. Dabei wird die vorher eng anliegende Wursthülle von der Wurst abgeblasen. Somit ist der Schälvorgang selbst schon in diesem Stadium des Schälprozesses eingeleitet. Die Austrittsöffnung für Wasserdampf/ Luft wird zweckmäßigerweise direkt hinter der Schneideinrichtung gewählt. Vorzugsweise ist der Messerschuh so ausgebildet, daß die Halterung für das Messer und die Auslaßöffnung für Wasserdampf/Luft in einem Werkstück, dem Messerschuh, untergebracht sind. Die aufgeschlitzte Hülle kann auch durch Anwendung eines Vakuums von der Wurstoberfläche abgesaugt werden.

Eine besonders bevorzugte Ausführungsform der Vorrichtung wird anhand der Fig. 1 bis 3 näher erläutert. Es zeigt
- Fig. 1 die Ausführungsform in Frontansicht,
- Fig. 2 die Ausführungsform der Fig. 1 im Schnitt entlang der Linie II-II der Fig. 1,
- Fig. 3 die Schneideinrichtung der Fig. 1 in vergrößertem Maßstab.

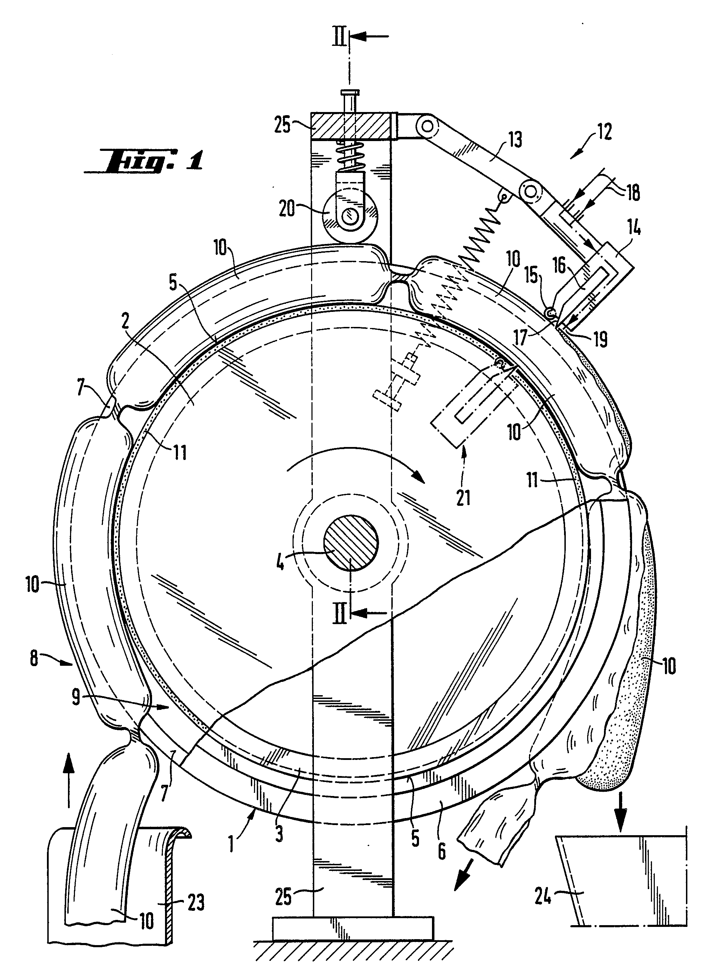

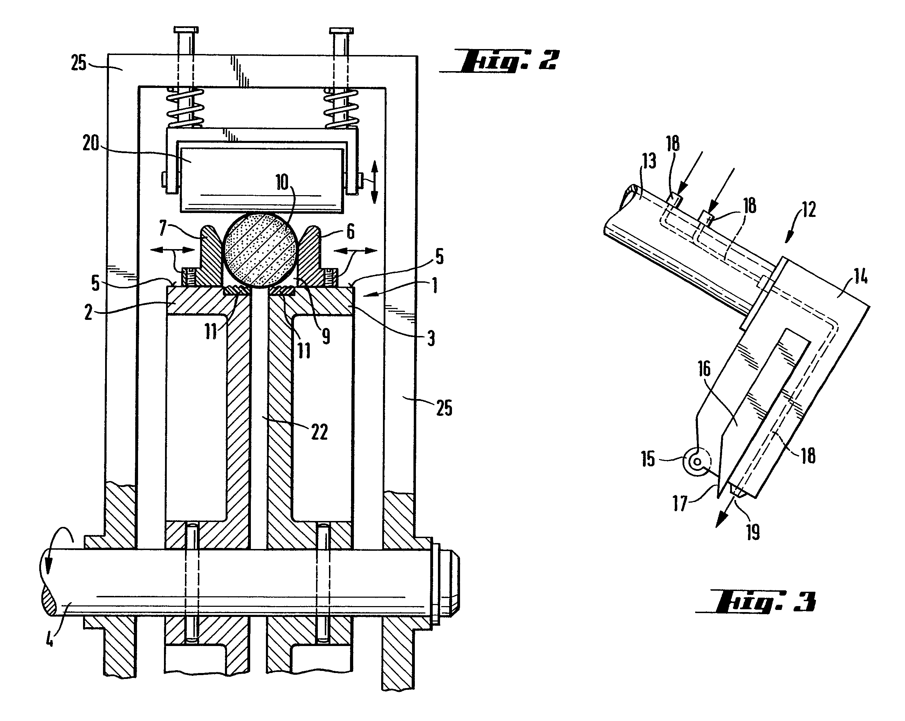

Die Vorrichtung der Fig. 1 besteht aus einer relativ großen Rolle 1, welche über eine nicht dargestellte Antriebseinheit in einer senkrechten Ebene im Uhrzeigersinn angetrieben wird. Sie besteht aus zwei symmetrischen Ringteilen 2,3 (Fig. 2), welche eine gemeinsame vertikale Rotationsachse 4 aufweisen. Auf der Umfangsfläche 5 der Rolle 1 befinden sich umlaufende ringförmige Elemente 6,7, welche zur seitlichen Führung des Wurststranges 8 eine rinnenförmige Vertiefung 9 bilden. Die Ringteile 6,7 sind in Richtung zur Rotationsachse 4 verschiebbar, so daß sich der Abstand der Elemente 6,7 an das Kaliber der Würste 10 anpassen läßt. Die Umfangsfläche 5 der Rolle 1 besteht im Bereich der Vertiefung 9 aus einem Noppengummi 11.

Die Würste 10 werden an der Schneideinrichtung 12, bestehend aus dem Hebelarm 13, Halterung 14, Rolle 15 und spitz zulaufendem Messer 16, vorbeigeführt. Die gewinkelt zur Wurstoberfläche sich erstreckende Schneidefläche 17 des Messers 16 schlitzt mit ihrer Spitze die Wursthaut auf, die Rolle 15 begrenzt die Eindringtiefe des Messers 16.

Die in Fig. 1 bereits angedeutete Zuführleitung 18 und Austrittsöffnung 19 für Heißwasserdampf/Luft-Gemisch, welche gleich nach dem Messer 16 angeordnet ist, ist in Fig. 3 in vergrößertem Maßstab dargestellt. Durch die Austrittsöffnung gelangt der Heißwasserdampf auf die Schnittstelle, wodurch sich die Hülle von der Wurst abhebt.

Es bedeuten ferner 20 eine Andrückrolle, 21 eine gegebenenfalls vorhandene zweite Schneideinrichtung, welche sich im Zwischenraum 22 zwischen den Ringteilen 2,3 befindet und die Wursthülle zusätzlich oder ausschließlich an der inneren Biegung aufschlitzt, und 23 eine trichterförmige Führung, die den Wurststrang 8 in die Rinne 9 führt. Dieser Trichter 23 steht 50 bis 80cm über dem Vorratsgefäß mit den Wurststrängen. Diese Entfernung reicht aus, um im Zusammenwirken mit dem Trichter 23 den Wurststrang 8 zu entwirren (entdröseln) und zu gewährleisten, daß die Würste mit der inneren Krümmung (Durchmesser) ohne weitere Hilfe auf der Rolle 1 zu liegen kommen. 24 ist ein Auffangbehälter für die geschälten Würste und 25 eine Halterung für die Rolle 1. Die abgeschälte Hülle wird aufgewickelt, abgesaugt oder von Hand entfernt.

## Ansprüche

1. Vorrichtung zum Schälen von Würsten, die hintereinander in einem Wurststrang angeordnet sind, wobei die Wursthülle, deren Hüllenmaterial insbesondere aus verstärkungsfreier regenerierter Cellulose besteht, von der Wurstmasse entfernt wird, umfassend eine Einheit zum längsaxialen Transport des Wurststrangs und eine Schneideinrichtung, insbesondere ein Messer, zum längsaxialen Aufschlitzen der Wursthülle, dadurch gekennzeichnet, daß zur Verarbeitung von Brühwurst in Cellulosekranzdarm die Einheit zum Transport des Wurststrangs (8) eine oder mehrere rotierbare, achsparallel zueinander angeordnete, vorzugsweise antreibbare Rollen (1) umfaßt, welche den Wurststrang (8) auf einer gebogenen Bahn zunächst nach oben und dann nach unten zur Schneideinrichtung (12) transportieren.

2. Vorrichtung nach Anspruch 1, dadurch gekennzeichnet, daß die Einheit zum Transport des Wurststranges (8) aus einer oder mehreren zylinderförmigen Rollen (1) besteht, deren Umfangsfläche (5) eine rinnenförmige Vertiefung (9) zur seitlichen Führung des längsaxial transportierten Wurststrangs (8) auf der gebogenen Bahn aufweist.

3. Vorrichtung nach Anspruch 2, dadurch gekennzeichnet, daß die Vertiefung (9) im Querschnitt V-förmig, U-förmig oder halbkreisförmig ist.

4. Vorrichtung nach einem der Ansprüche 1 bis 3, dadurch gekennzeichnet, daß die Einheit zum Transport des Wurststranges aus einer zylinderförmigen Rolle besteht, an deren Seitenflächen kreisförmige Scheiben angrenzen, deren Durchmesser größer ist als der Rollendurchmesser, wodurch ihre Umfangsränder eine seitliche Führung für den Wurststrang ergeben.

5. Vorrichtung nach einem der Ansprüche 1 bis 3, dadurch gekennzeichnet, daß die Einheit zum Transport des Wurststranges aus einer kreiszylinderförmigen Rolle (1) besteht, deren Umfangsfläche zwei kreisförmige Ringe (6,7) aufweist, welche eine seitliche Führung für den Wurststrang (8) ergeben.

6. Vorrichtung nach Anspruch 4 oder 5, dadurch gekennzeichnet, daß der gegenseitige Abstand der kreisförmigen Scheiben bzw. kreisförmigen Ringe (6,7) in Abhängigkeit vom Kaliber der Würste (10) einstellbar ist.

7. Vorrichtung nach einem der Ansprüche 1 bis 3, dadurch gekennzeichnet, daß die Einheit zum Transport des Wurststrangs (8) aus einer rotierbaren Rolle (1) besteht, die aus zwei Ringteilen (2,3) zusammengesetzt ist, welche eine gemeinsame Rotationsachse aufweisen, daß diese Teile (2,3) symmetrisch aufgebaut sind, wobei sich die Symmetrieebene quer zur Rotationsachse (4) erstreckt, daß diese Ringteile (2,3) auf ihrer Umfangsfläche (5) Elemente (6,7) zur seitlichen Führung des Wurststranges (8) aufweisen, welche vorzugsweise jeweils als ein umlaufender, ringförmiger Wulst ausgebildet sind, und daß diese Elemente (6,7) der Umfangsfläche (5) der Ringteile (2,3), vorzugsweise die Ringteile (2,3) selbst, in Richtung der Rotationsachse (4) in variablem Abstand verstellbar sind.

8. Vorrichtung nach einem der Ansprüche 1 bis 7, dadurch gekennzeichnet, daß die Umfangsfläche (5) der Rolle(n) (1) eine erhöhte Rauhigkeit aufweist.

9. Vorrichtung nach Anspruch 8, dadurch gekennzeichnet, daß die Umfangsfläche (5) Erhebungen und/oder Vertiefungen, insbesondere in Form von Noppen oder Rillen, aufweist.

10. Vorrichtung nach einem der Ansprüche 1 bis 9, dadurch gekennzeichnet, daß die Umfangsfläche (5) der Rolle(n) (1) aus elastischem Material, insbesondere aus Gummi, besteht.

11. Vorrichtung nach einem der Ansprüche 1 bis 10, dadurch gekennzeichnet, daß sie eine Einrichtung zum Anblasen der Wurst mit feuchter Luft, insbesondere Heißwasserdampf, umfaßt, welche vorzugsweise an oder unmittelbar nach der Schneideinrichtung (12) angeordnet ist.

12. Vorrichtung nach einem der Ansprüche 1 bis 11, dadurch gekennzeichnet, daß die Schneideinrichtung (12) mit variablem Anpreßdruck auf der Wursthüllenoberfläche aufliegt.

13. Vorrichtung nach einem der Ansprüche 1 bis 12, dadurch gekennzeichnet, daß die Schneideinrichtung (12) ein spitz zulaufendes Messer (16) umfaßt, dessen Schneidefläche (17) einen Winkel von 50 bis 90° mit der Wurstoberfläche bildet.

EP 0 303 966 A2

**Fig. 1**

HOECHST AKTIENGESELLSCHAFT
87/K 049

Fig. 3

Fig. 2

HOECHST AKTIENGESELLSCHAFT
87/K 049